# EUROPEAN PATENT APPLICATION

(11) **EP 4 722 917 A1**
(43) Date of publication of application: **08.04.2026**
(21) Application number: 24203881.8
(22) Date of filing: 01.10.2024
(51) Int. Cl.: G06F 9/52, G06F 13/38, G06N 3/063, G06F 12/00, G06N 3/045, G06F 12/02, G06F 12/06, G06F 12/109, G06F 13/28, G06F 13/40

(54) **NEURAL NETWORK PROCESSOR AND METHOD**

(71) Applicant: NXP B.V., 5656 AG Eindhoven (NL)
(72) Inventor: Fuks, Adam, 5656AG Eindhoven (NL); Bamberg, Lennart Janis, 5656AG Eindhoven (NL); Kimelman, Paul, deceased (NL)
(74) Representative: Miles, John Richard

(57) **Abstract**

A neural network processor processes layers of a neural network with a number of processing elements (PEs) configured to operate in lock-step and has a same number of memory zones. During a lock-step cycle, within each memory zone, a first set of zone memories are configured to store neural network layer input data, a second set of zone memories are configured to store neural network layer weights and a third set of zone memories are configured to store neural network layer results. A processing element has exclusive access to (i) a first set of zone memories, (ii) a second set of zone memories and (iii) a third set of zone memories. The sets of zone memories can be in the same or different zones during a lock-step cycle. A data mover has exclusive access to a fourth set of zone memories in each of the memory zones.

## Description

### FIELD

This disclosure relates to a neural network processor and method of neural network processing.

### BACKGROUND

There are various ways of implementing neural network processing units (NPUs). A common method is to use systolic-array-based compute which has the advantage of relative simplicity in compute but has the major disadvantage of being highly non-scalable. Certain compute jobs can benefit from a high utilization from such an architecture, whilst others will suffer from a very low utilization.

Another method of implementing an NPU is via hardcoded functions divided into multiple cores. This method can provide better overall utilization but lacks flexibility for future extension since neural network topologies and operators are constantly evolving.

A third method of implementing an NPU is via programmable processing elements. This can seemingly lead to better utilization as well as programmability, but it comes with the overhead of programming the multiple processing elements. Eventually, the overhead cost of programming limits the performance (Amdahl's Law).

It is, therefore, traditionally the case that either a very large monolithic compute structure is built, or it is distributed into multiple processing cores, but ones which require either full autonomy and are thus interconnected via a communication channel and via the usage of caching to allow better re-use between the cores.

### SUMMARY

Aspects of the disclosure are defined in the accompanying claims. In a first aspect, there is provided a neural network processor comprising: a plurality of N processing elements, PEs, coupled to a first layer switch network; a plurality of N memory zones, each memory zone comprising a plurality of zone memories coupled to a respective second layer switch network, each second layer switch network coupled to the first layer switch network; a data mover coupled to the first layer switch network and configured to be coupled to a system memory; wherein the plurality of processing elements are configured to process layers of a neural network in a plurality of lock-step cycles during a compute phase and wherein in each lock-step cycle of the plurality of lock-step cycles: a first set of zone memories within each zone are configured to store neural network layer input data; a second set of zone memories within each zone are configured to store neural network layer weights; a third set of zone memories within each zone are configured to store neural network layer results; and each processing element of the plurality of processing elements is configured to exclusively access the first set of zone memories, the second set of zone memories and the third set of zone memories in at least one memory zone of the plurality of memory zones.

In some embodiments, during each lock-step cycle, the data mover is configured to exclusively access a fourth set of zone memories in at least one memory zone of the plurality of memory zones.

In some embodiments, each processing element of the plurality of processing elements is configured to exclusively access the first set of zone memories, the second set of zone memories and the third set of zone memories in a single respective memory zone of the plurality of memory zones.

In some embodiments, each processing element of the plurality of processing elements is configured to exclusively access the first set of zone memories, the second set of zone memories in a first single respective memory zone of the plurality of memory zones and configured to exclusively access the third set of zone memories in a second single respective memory zone of the plurality of memory zones.

In some embodiments, a first processing element of the plurality of processing elements is configured to have read access to a first memory zone of the plurality of memory zones and a second processing element of the plurality of processing elements is configured in a listening mode to receive data accessed by the first processing element.

In some embodiments, the neural network processor of any preceding claim further comprises a controller, the controller configured to be coupled to a processing element control bus of each of the plurality of processing elements, a data mover control bus and further configured to be coupled to a system control bus, wherein the controller is configured to receive PE instructions and data mover instructions via the system control interface and to provide the PE instructions to the plurality of processing elements and data mover instructions to the data mover via the respective processing element control bus and the data mover control bus.

In some embodiments, each of the processing elements has a corresponding address aperture, the controller is further configured to: provide a PE instruction to a processing element in response to a PE instruction address being within the corresponding address aperture; and simultaneously provide the PE instruction to all of the plurality of processing elements in response to the PE instruction address being within a common address aperture.

In some embodiments, each compute phase is initiated by a start instruction having a start instruction address within the common address aperture.

In some embodiments, each of the processing elements comprise a plurality of instruction registers and a corresponding plurality of shadow registers, and wherein the plurality of instruction registers are updated from the plurality of shadow registers in response to a completion of the compute phase.

In some embodiments, control instructions for a next lock-step cycle are provided to each of the processing elements and stored in the plurality of shadow registers during a current compute phase.

In some embodiments, each of the plurality of processing elements further comprises a processing element data read bus, a processing element parameter read bus and a processing element result write bus coupled to the first layer switch network; the data mover comprises a data mover write bus and a data mover read bus coupled to the first layer switch network, and further comprises a system memory bus; the second layer switch network of each memory zone comprises a respective zone data read bus, a zone parameter read bus, a zone result write bus, a zone memory write bus and a zone memory read bus coupled to the first layer switch network; and each of the plurality of zone memories comprises a local memory read bus and a local memory write bus coupled to the second layer switch network.

In some embodiments, during each lock-step cycle: each of the plurality of zone memories of each memory zone is coupled to only one of the zone data read bus, the zone parameter read bus, the zone result write bus, the zone memory write bus and the zone memory read bus; each processing element data read bus is coupled to a zone data read bus of one of the plurality of memory zones; each processing element parameter read bus is coupled to a respective zone parameter read bus of one of the plurality of memory zones; each processing element result write bus is coupled to a zone parameter write bus of one of the plurality of memory zones; the data mover write bus is coupled to the zone memory write bus for each memory zone of the plurality of memory zones; and the data mover read bus is coupled to the zone memory read bus for each memory zone of the plurality of memory zones.

In some embodiments, the plurality of zone memories are configured in memory banks and wherein the plurality of processing elements and the data mover configured to receive a virtual address having a plurality of zone bits, a plurality of bank bits and a plurality of bank memory address bits and translate the plurality of zone bits and the plurality of bank bits to a physical memory zone address and a physical memory bank address within the memory zone.

In a second aspect, there is provided a method of neural network processing, the method comprising: processing layers of a neural network with a plurality of N processing elements configured to operate in lock-step in a plurality of lock-step cycles during a compute phase; during each lock-step cycle of the plurality of lock-step cycles: providing a plurality of N memory zones, each memory zone comprising a plurality of zone memories; providing a first set of zone memories within each memory zone configured to store neural network layer input data; providing a second set of zone memories within each memory zone configured to store neural network layer weights; providing a third set of zone memories within each memory zone configured to store neural network layer results; and exclusively accessing by each processing element the first set of zone memories, the second set of zone memories and the third set of zone memories in at least one memory zone of a plurality of memory zones.

In some embodiments, the method further comprises during each lock-step cycle of the plurality of lock-step cycles: exclusively accessing a fourth set of zone memories in at least one memory zone of the plurality of memory zones by the data mover.

In some embodiments, the method further comprises: accessing data in a first memory zone of the plurality of memory zones by a first processing element of the plurality of processing elements and receiving by a second processing element of the plurality of processing elements configured in a listening mode the data accessed by the first processing element.

In some embodiments, the method further comprises: providing a PE instruction to a processing element in response to a PE instruction address being within a corresponding address aperture, or simultaneously providing the PE instruction to all of the plurality of processing elements in response to the PE instruction address being within a common address aperture.

In some embodiments, the method further comprises: initiating the compute phase by providing a start instruction having a start instruction address within the common address aperture.

In some embodiments, the method further comprises, in response to a completion of the compute phase, updating a plurality of instruction registers of the plurality of processing elements from a corresponding plurality of shadow registers of the plurality of processing elements.

### BRIEF DESCRIPTION OF THE DRAWINGS

In the figures and description like reference numerals refer to like features. Embodiments are now described in detail, by way of example only, illustrated by the accompanying drawings in which:
Figure 1 Shows a neural network processor according to an embodiment.
Figure 2 shows a method of operation of the neural network processor of figure 1.
Figure 3A and Figure 3B shows an example virtual-to-physical address scheme for the neural network processor of figure 1.
Figure 4 illustrates an example listener mode configuration of a neural network processor according to an embodiment.
Figure 5 shows an example memory map for the neural network processor of figure 1.
Figure 6 illustrates an example method of operation during a compute phase of a neural network processor according to an embodiment.
Figure 7A, Figure 7B, Figure 7C, Figure 7D illustrate an example method of operation during a lock-step cycle of a neural network processor according to an embodiment.
Figure 8 shows a timing diagram which illustrates the operation of a neural network processor with four processing elements according to an embodiment.
Figure 9 shows a timing diagram of a computation task for a PE in the neural network processor of figure 1.

### DETAILED DESCRIPTION OF EMBODIMENTS

Embodiments described allow the utilization of multiple (register programmable) processing elements (PEs) via a central control with no duplication of data or parameters (i.e. no caching or copies), and to achieve a very high performance. The number of processing elements in embodiments of the neural processing unit is scalable to improve performance without the cost of programming limiting performance by the use of lock-step processing and control with a single controller. The neural processing unit allows running all of the necessary blocks in complete unison (e.g. the compute circuitry) and in parallel (e.g. data movement while computing).

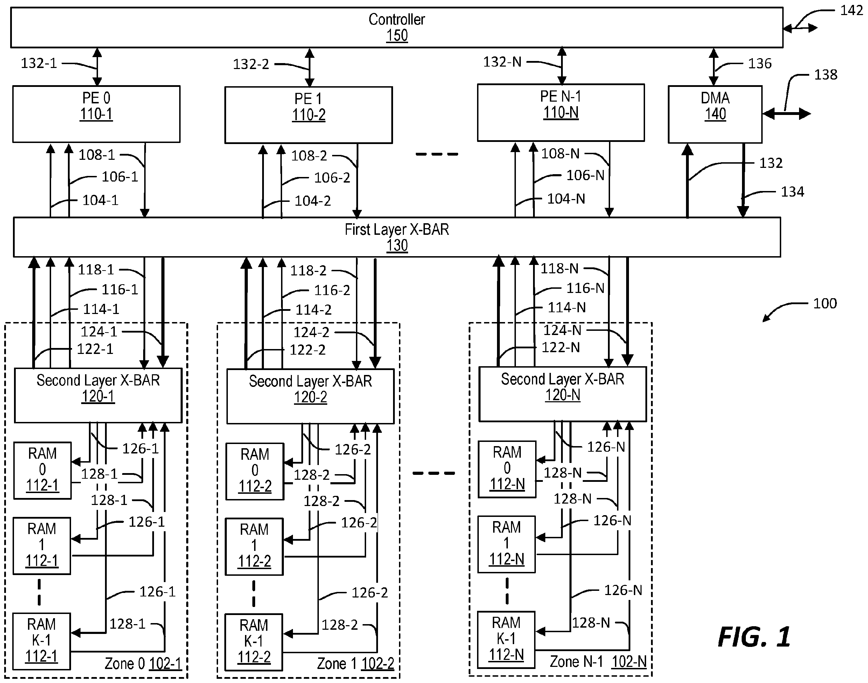

Figure 1 shows a neural network processor 100 according to an embodiment, the neural network processor 100 has a number N of processing elements (PEs) 110-1, 110-2, 110-N and a direct memory access (DMA) controller 140 which may also be referred to as a data mover or DMA engine. A controller 150 has a system control bus interface 142 and PE control bus interfaces 132-1, 132-2, 132-N connected to the respective PE. The controller 150 has a DMA control interface 136 connected to the DMA 140. The PEs 110-1, 110-2, 110-N each have a data read bus 104-1, 104-2, 104-N, a parameter (or weight) read bus 106-1, 106-2, 106-N and a result write bus 108-1, 108-2, 108-N connected to the first layer switching network 130 which may be implemented as a cross bar network. The DMA 140 has a data mover read bus 132 and a data mover write bus 134 connected to the first layer switching network 130. The DMA 140 has a system data bus interface 138 which is connected to system memory (not shown). The neural network processor 100 further includes N memory zones (Zone 0, Zone 1, Zone N-1) 102-1, 102-2, 102-N, i.e. a corresponding number of memory zones to the number of PEs 110. Each memory zone 102-1, 102-2, 102-N includes a respective second layer switching network 120-1, 120-2, 120-N which may be implemented as a cross bar network and K zone memory banks (RAM0, RAM1, RAM K-1) 112-1, 112-2, 112-N which may also be referred to as tightly-coupled memory (TCM).

Each zone memory bank RAM0, RAM1, RAM K-1 has a separate zone memory write bus 126-1, 126-2, 126-N and a separate zone memory read bus 128-1, 128-2, 128-N connected to the respective second layer switch network 120-1, 120-2, 120-N. The second layer switch networks 120-1, 120-2, 120-N have a respective data read bus 114-1, 114-2, 114-N, a parameter (or weight) read bus 116-1, 116-2, 116-N a result write bus 118-1, 118-2, 118-N, data mover read bus 122-1, 122-2, 122-N, a data mover write bus 124-1, 124-2, 124-N connected to the first layer switch network 130. The direction of the arrows of the busses 104, 106, 108, 114, 116, 118, 122, 124, 132, 134 indicates the data flow direction. It will be appreciated that each of the busses also includes addresses output from the PEs 110 and the data mover 140 to the switching networks 130, 120 in order to access the memory zones 102.

The first layer switching network 130- and second-layer switching networks 120-1, 120-2, 120-N may couple any of the zone memories 112-1, 112-2, 112-N to any of the PEs 110-1, 110-2, 110-N or the data mover 140 determined by the memory addressing. The memory accesses do not require arbitration, conflict of addresses is not allowed and handled during compilation of the software off-line so that there is never a colliding access between two buses to the same zone memory bank RAM0, RAM1, RAM K-1. The neural network processor 100 provides five bus entry points per zone (i.e. PE data read, PE weight read, PE result write, data mover read, and data mover write). Because only one bus can access a particular zone memory bank, the zone bandwidth is guaranteed. The first layer switching network 130 and second layer switching networks 120-1, 120-2, 120-N may implement a crossbar switch as a star topology network. A star topology may allow PEs 110-1, 110-2, 110-N and the data mover 140 to switch between different zones with predictable (approximately equal) access times regardless of which zone is accessed. The PEs 110-1, 110-2, 110-N include user programmable PE instruction registers and an associated set of PE shadow registers which may be programmed from a central processor unit (CPU) (not shown) connected to the system control bus 142 and via controller 150. The data mover 140 may include user configurable registers to select different operating modes which may also be similarly programmed from the CPU (not shown).

In operation, the PEs 110-1, 110-2, 110-N are configured to perform processing operations which may be referred to as "Tiling" operations. The term "Tiling" refers to the division of the layers of a neural network into a sequence of compute and data mover (DMA) tasks. During a task each of the PEs 110-1, 110-2, 110-N may operate on a "tile" of data and parameters (weights) of a neural network layer and the data mover 140 may transfer data between system memory and at least some of the zone memories 112-1, 112-2, 112-N.

The zonal memory arrangement of the neural network processor 100 may allow flexible access to zone memory banks 112-1, 112-2, 112-N with predictable access times. This may allow the neural network processor to support two levels of scheduling. A first level of scheduling is a time slot which may be referred to as a "Tick" during which some data movement and/or computation is scheduled to be performed. The computation tasks in a time slot may consist of a number of compute phases This may allow PEs 110-1, 110-2, 110-N to execute in a lock-step operation. The term lock-step as used herein means that every clock cycle (lock-step cycle) of instruction execution by the PEs 110-1, 110-2, 110-N is performed synchronously. The programming tasks for a particular compute phase are started simultaneously for all the PEs. During a particular lock-step cycle a given zone memory bank is only accessed by one PE. The completion of a "Tick" may be determined by a scheduling event generated when all compute and data movement are completed.

The DMA 140 allows zonal packing and/or unpacking for the memory zones 102. The DataMover DMA 140 may allow pushing of data from TCM to external memory in a linear mode, i.e. continuous read of data in TCM and continuous region in external memory. The DataMover DMA 140 may allow pushing of data from TCM to external memory in packed mode. In packed mode the DataMover reads data from TCM in interleaved fashion (typically interleaving data from different zones) and write the data linearly in the external memory.

The DataMover DMA 140 may allow fetching of data or weights in linear mode, i.e. continuous both in TCM and external memory. The DataMover DMA 140 may allow fetching of data or weights in an unpacked mode. This has continuous data in external memory, but it is unpacked in an interleaved fashion into the TCM which is the opposite process of packed pushing described above.

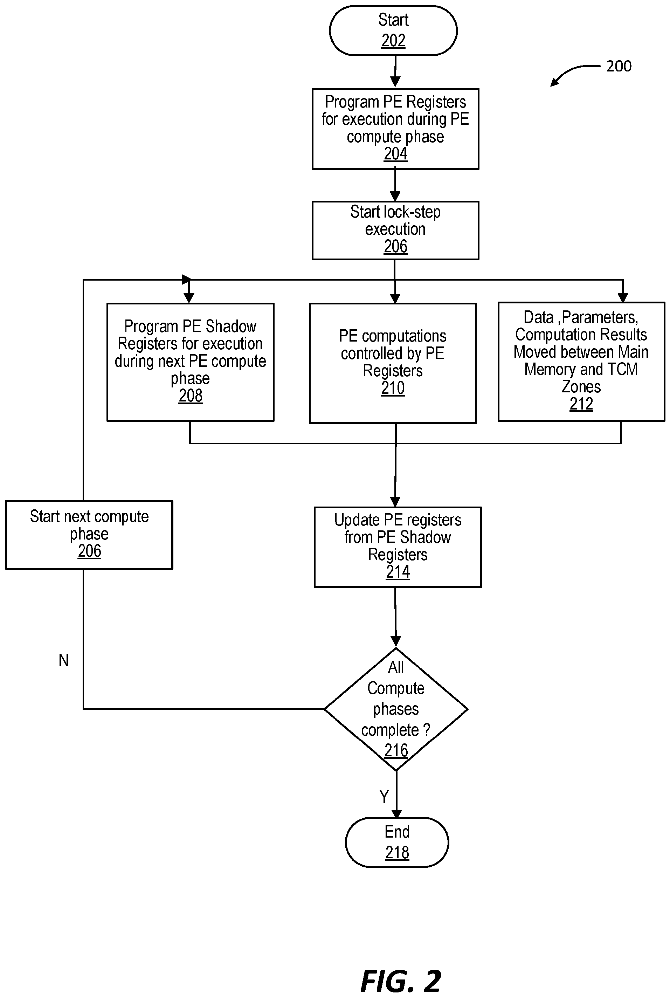

Figure 2 shows a method of operation 200 of neural network processor 100 during a time slot or "Tick". The method starts in step 202. In step 204 the PE registers are programmed for execution. The first compute phase starts in step 206. The PE shadow registers may be programmed for execution during the next PR compute phase during the following compute phase (step 208). The PE computations for PEs 110-1, 110-2, 110-N controlled by the respective PE registers are executed (step 210). Data, parameters (weights) and computation results may be moved to/from the main system memory and the zone memory banks by the data mover 140 (step 212). The steps 208, 210, 212 are carried out concurrently. In step 214, the PE registers may update values from the PE shadow registers, since the current PE computation phase is complete. The compute phase completion may be signalled by a completion event signal to the controller 150 which causes the PE registers to update. Similarly, the data mover 140 may signal to controller 150 when the data moving jobs for the current cycle are complete. In step 216, the method may check if all compute phases are complete (i.e. the layers have been processed). If the computation is finished the method ends (step 218). Otherwise, the next lock-step cycle is started (step 206) and the method returns to steps 208, 210, 212.

The neural network processor 100 may implement virtual-to-physical address (V2P) translation. The V2P may have separate v2p tables for mapping for data, weights and results. This may allow simultaneous usage by the PEs for compute (e.g. as data), while the DataMover may have a different memory view of banks for writing out results. The role of a zone memory bank may temporally change between lock-step cycles for any of Data /Weight/Result. For example, a PE reading via parameter read bus will use weights V2P, reading via data read bus 104 may use data V2P and writing results via result write bus 108 may use result V2P. The DataMover 140 may use weights V2P if fetching weights, data V2P if fetching data and results V2P if pushing results. This may allow defragmentation of memory to re-order memory banks such that separate banks can be joined. This may further allow the creation of contiguous regions of memory for shared operands which can span multiple zones. Note that since each PE can only get access to a zone for a given 'topic' (Data/Parameters/Result), it means that if an operand is not shared, then each PE must necessarily run from a unique zone for that topic. The virtual-to-physical address translation may allow the shared parameter (which is allowed to span multiple zones) to be able to have a contiguous space, even though it must necessarily skip over physical banks dedicated for other purposes.

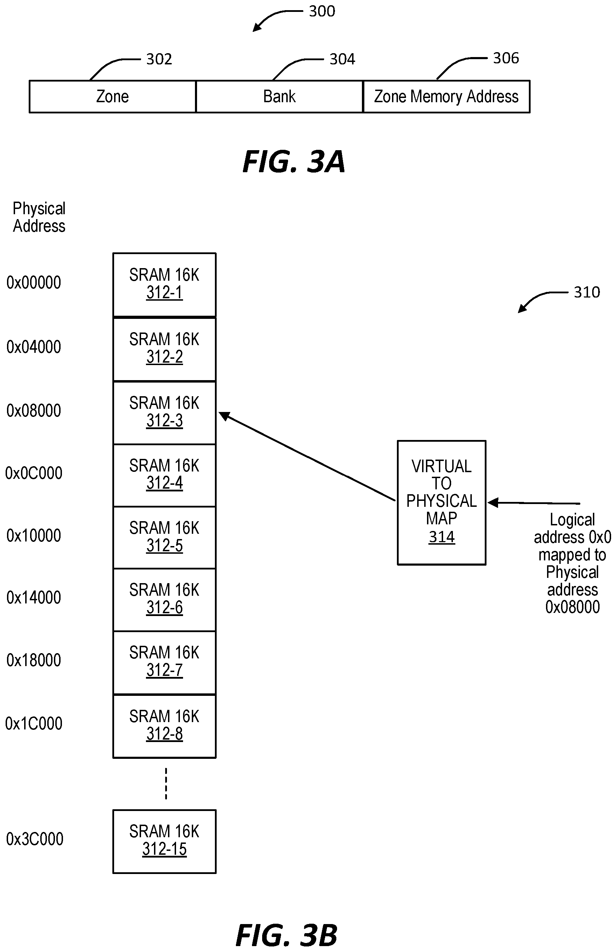

An example V2P scheme 300 is shown in figure 3A. The addressing consists of a zone field 302, bank ID field 304 and zone memory bank address field 306. For example, with reference to figure 3B which shows a V2P translation example 310, if zone memory bank 312-1 is 16kB bank size, and there are 16 banks per zone (312-1 to 312-15) and 4 zones, the zone field is 2 bits the bank field has 4 bits. The V2P mapping 314 allows the translation of the Zone and Bank bits into any other 6-bit number. This means that banks can even appear as though they are in a different physical zone than they are. Typically zone memory banks across zonal boundaries occur if the operand is shared across PEs.

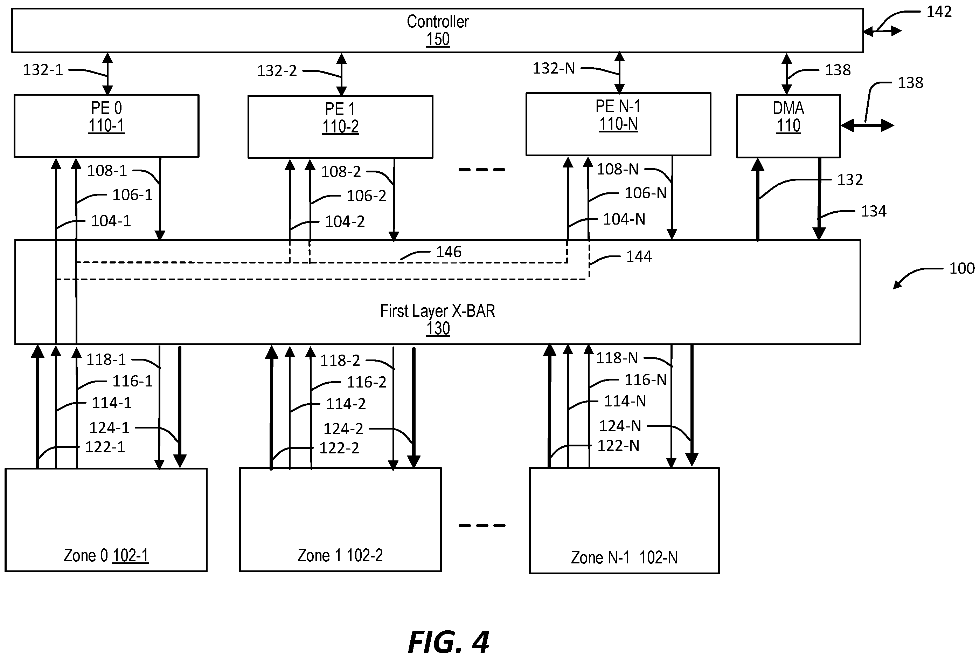

The neural network processor 100 may be configured in a listener mode which may be used for broadcasting shared operands to all the PEs 110. An example listener mode configuration is shown in figure 4. The first PE 110-1 is the only PE that makes access requests, in this case to memories in zone 0 via data read bus 104-1 and parameter read bus 106-1. The remaining PEs 110-2, 110-N may all receive the data/parameters via their respective data read bus 104-2, 104-N and parameter read bus 106- 2, 106-N via the first layer switch network 130 illustrated by dashed lines 144, 146. In other examples a different PE than the first PE 110-1 may be the only PE which makes access requests. In other examples only a subset of the PEs may be in listening mode.

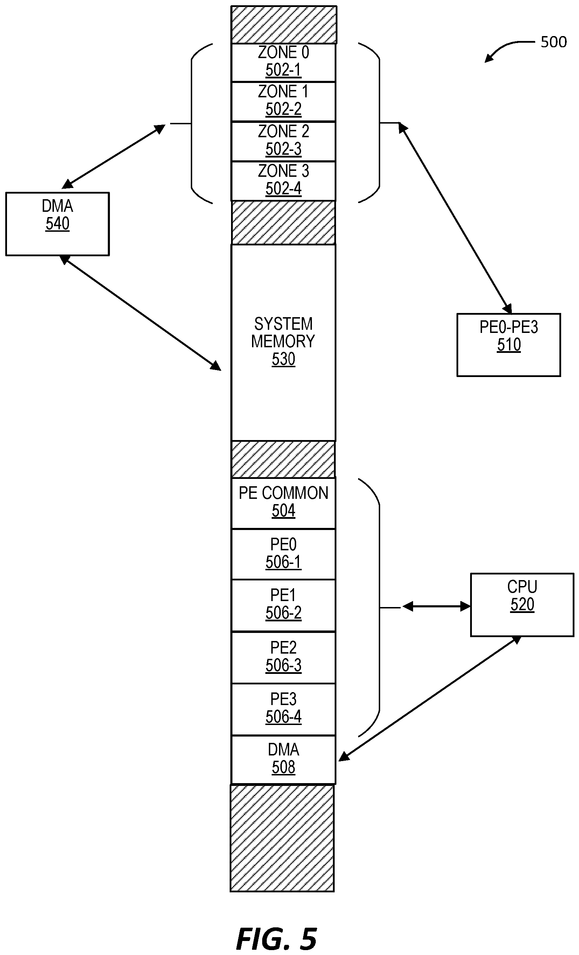

Figure 5 shows an example memory map 500 for a neural network processor such as neural network processor 100 configured with four PEs. The DMA 540 implemented for example similarly to DMA 140 is the only element permitted to move data/parameters/results between system memory 530, for example the memory connected to the system data bus interface 138, and memory zones 502-1, 502-2, 502-3, 502-4. The DMA 140 may also move data between zones 502-1, 502-2, 502-3, 502-4. The PEs 510 may read data and parameters and write results to any of the zones, the particular zones being accessed are fixed during each lock-step cycle. The control register of the DMA 540 may be programmed or read via control address aperture 508 by the CPU 520. The control registers of the PE's 510 may be programmed or read by the CPU 520 via individual address aperture 506-1, 506-2, 506-3, 506-4 used to customize settings per PE or a common broadcast aperture 504 which simultaneously programs all PE's with same value.

Embodiments of the neural network processor allow operation in lock-step which may allow scaling of neural network processing without compromising computational efficiency. Some example operations of a neural network processor 100 with N=4 is described for tiling operations. A tiling operation may be spatial or temporal. Spatial tiling affects how the compute of a neural network layer is distributed over the N PEs compute blocks in the system, i.e. multicore task allocation/tiling. Temporal tiling affects how the compute of an NN layer is distributed over time, in other words what the PEs compute first.

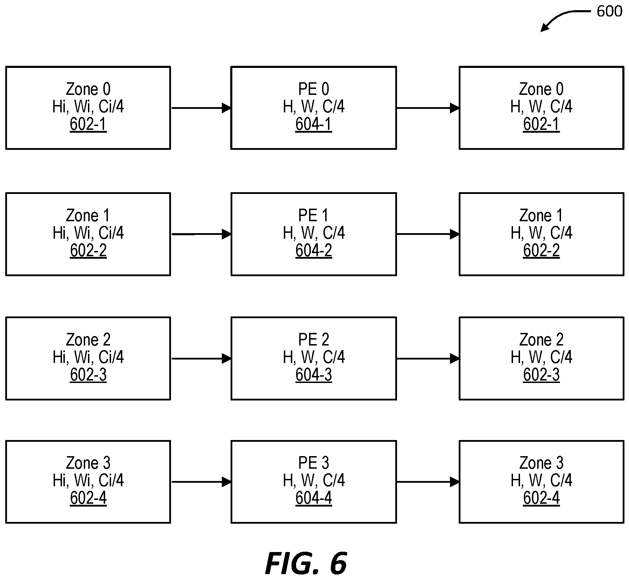

Figure 6 shows an example compute phase 600 for a neural network processor which may be implemented for example similarly to neural network processor 100 with N=4. During each compute phase each PE 604-1, 604-2, 604-3, 604-4 may execute one or more MAC (multiply-accumulate) operations on input layer dimension H, W, and a number of channels C. In this example, each PE determines the layer results for C/4 channels. The zone memory banks within a particular zone accessed by the PE are fixed during each lock-step cycle within a compute phase but may change between lock-step cycles. As illustrated each PE 604-1, 604-2, 604,3, 604-4 reads data and parameters from memory banks in respective memory zones 602-1, 602-2, 602-3, 602-4 and writes results to memory banks in respective memory zones 602-1, 602-2, 602-3, 602-4.

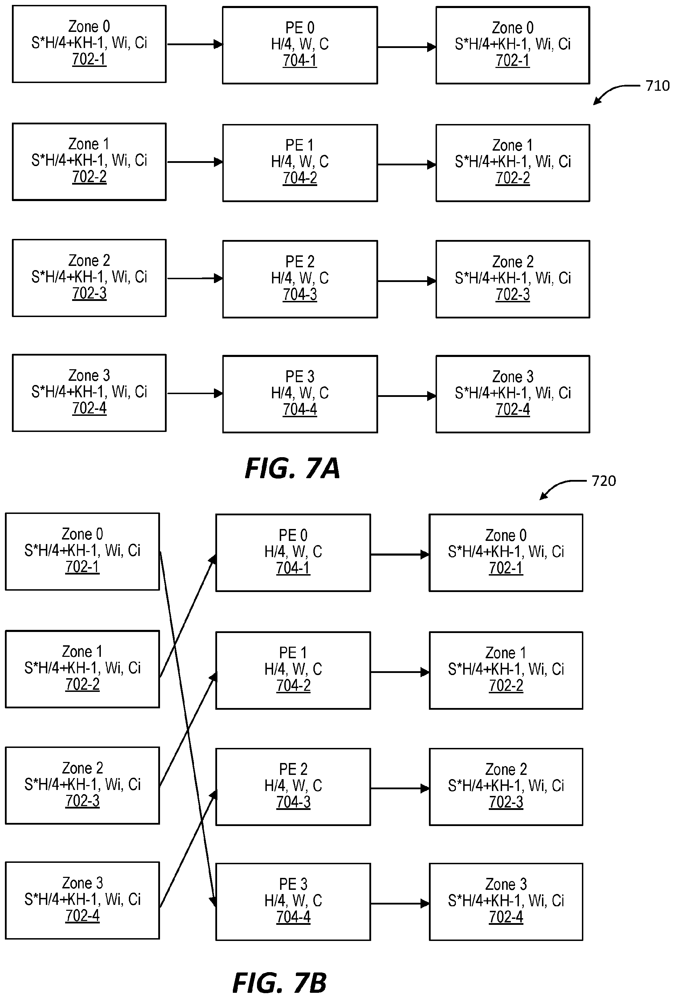

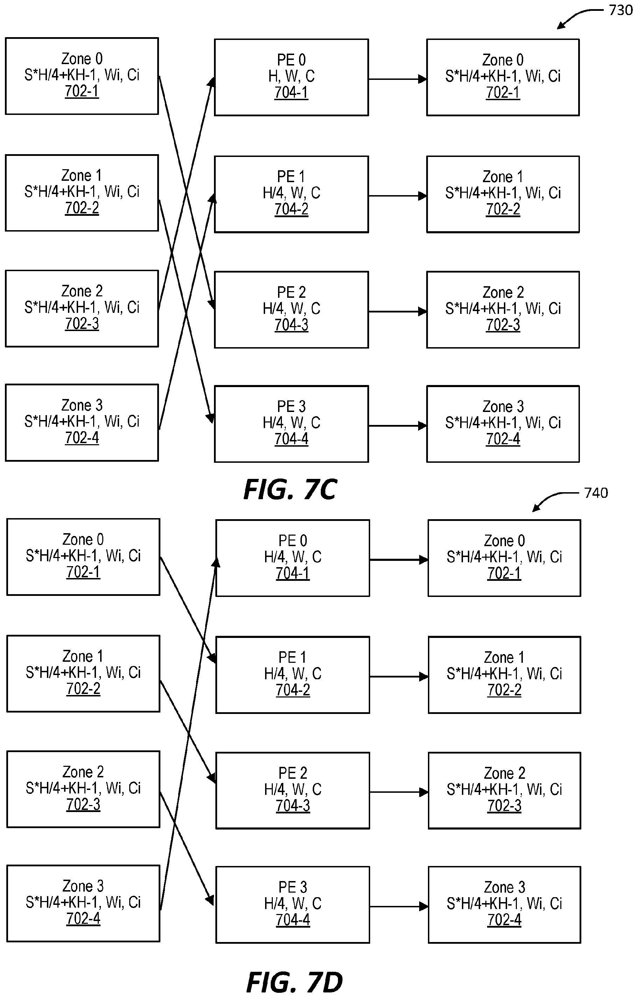

Figures 7A - 7D shows a further example sequence of compute phases for a neural network processor which may be implemented for example similarly to neural network processor 100 with N=4. Each PE 704-1, 704-2, 704-3, 704-4 may execute one or more MAC (multiply-accumulate) operations on input layer dimension H, W, and a number of channels C. each PE 704-1, 704-2, 704-3, 704-4 reads data and parameters from memory banks in respective memory zones 702-1, 702-2, 702-3, 702-4 (Zone 0 , Zone 1, Zone 2 Zone 3) and writes results to memory banks in respective memory zones 702-1, 702-2, 702-3, 702-4.

In this example, the input layer is cut by height into N regions, in this case 4 regions, which may be overlapping such that each PE has required input data (i.e. data/parameters) for the output lines (results) computed in its local zone. Each PE only reads input from a respective zone. Different data is allocated to different zones. Due to the overlapping convolution input regions of the height tiles, for the condition where the KernelHeight (k) > Stride (s) of the memory, data may be TCM-to-TCM copied between the tops/bottoms of adjacent zones. The TCM-to-TCM copy may be done by the data mover 140 having access to the zone memories which store the results of the previous compute phase. For each lock-step cycle a PE always reads only data from one zone, but after finishing processing the data in the current input zone, each PE advances to the next zone in lock-step with wrapping around at the bottom so that every PE processes the full height/input. The input layer is globally shared but has mutually exclusive accesses in time so each PE reads different inputs at a time. The parameters are fully exclusive and stored in the local zone. In all the cases illustrated each PE writes results to the same respective memory zone. As illustrated, PEO writes to Zone 0, PE1 writes to Zone 1, PE2 writes to Zone 2 and PE3 writes to Zone 3.

During the first compute phase 710, PE0 works on the first padded input tile in Zone 0, PE1 works on the second padded input tile in Zone 1, PE2 works on the third padded input tile in Zone 2, PE3 works on the fourth padded input tile in Zone 3. The PEs then rotate the input zone for the next compute phase .

During the second compute phase 720, PE0 works on the second padded input tile in Zone 1, PE1 works on the third padded input tile in Zone 2, PE2 works on the fourth padded input tile in Zone 3, PE3 works on the first padded input tile in Zone 0. The PEs then rotate the input zone for the next compute phase .

During the third compute phase 730, PE0 works on the third padded input tile in Zone 2, PE1 works on the fourth padded input tile in Zone 3, PE2 works on the first padded input tile in Zone 0, PE3 works on the second padded input tile in Zone 1. The PEs then rotate the input zone for the next compute phase .

During the fourth compute phase 740, PE0 works on the fourth padded input tile in Zone 3, PE1 works on the first padded input tile in Zone 0, PE2 works on the second padded input tile in Zone 1, PE3 works on the third padded input tile in Zone 2. After completion of compute phase 740 every PE has processed the full height/input.

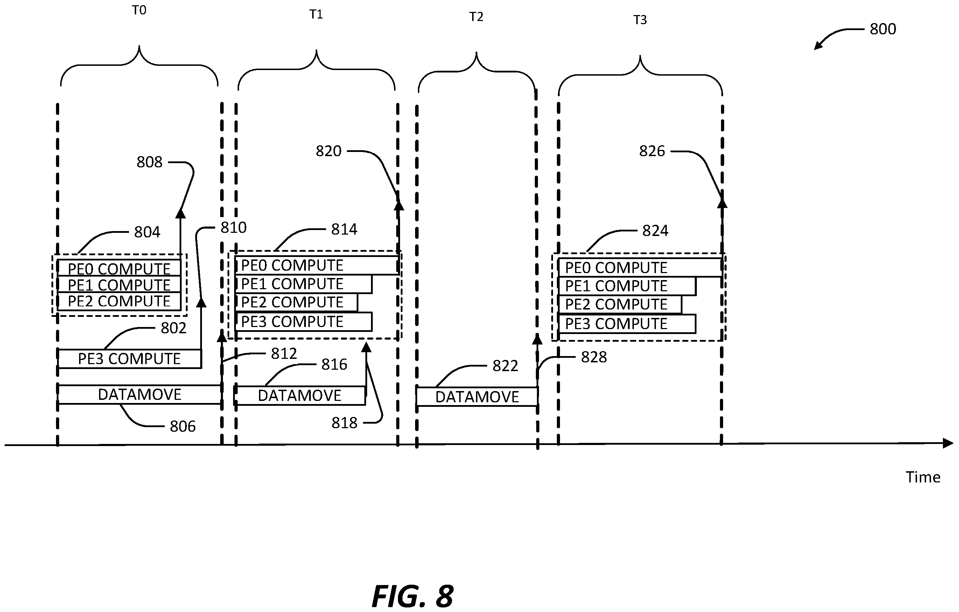

Figure 8 is a timing diagram 800 which illustrates the operation of a neural network processor with four PEs according to an embodiment. The neural network processor may for example be neural network processor 100 with N=4. In a first time-interval or "Tick" T0 three PEs 804 may operate during one or more compute phases in lock step and a fourth PE 802 may operate independently. As illustrated, lock step PEs 804 finish at the same time; because they are operating in lock-step, a compute completed status signal 808 of only one PE needs to be monitored by the controller, for example controller 150, to indicate the end of the compute task. The fourth PE task 802 generates a compute complete status signal 810. The data move task 806 operates in parallel and generates a data move complete signal 812. When all completed status signals 808, 810, 812 are generated, then Tick T0 is completed. In other examples a data move task may span more than one time interval so may be scheduled to start in Tick T0 and completed in Tick T1. In this case, Tick T0 would be completed when status signals 808,810 are generated.

In a second time-interval or "Tick" T1 four PEs 814 may operate during one or more compute phases in lock step. As illustrated, it is known from the computations scheduled to be executed during T1 that PE0 has the most computations to perform. Because all PEs are operating in lock-step only the compute completed status signal 820 of PE0 needs to be monitored by the controller, for example controller 150, to indicate the end of the compute task since because of the lock-step operation PE0 is guaranteed to finish last. The data move task 806 operates in parallel and generates a data move complete signal 816 when the operations are completed. When all completed status signals 820, 818 are generated, then Tick T1 is completed.

In a third time interval T2, only data-move task 822 is scheduled to be completed, indicated by data-move complete status 828. In a fourth time interval T3 only computation tasks are scheduled with four PEs 824 and is complete when status signal 826 is generated.

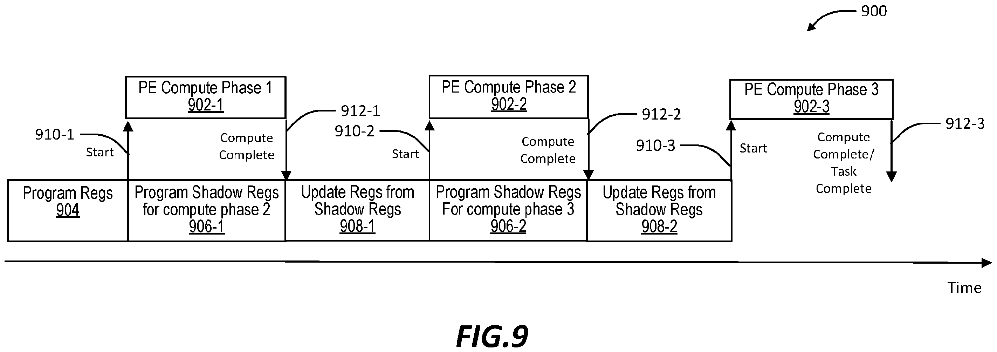

Figure 9 shows a timing diagram of a computation task 900 for a PE in neural network processor 100 operating in lock step with other PEs for a time interval assuming three computation phases 902-1, 902-2, 902-3. At the beginning of the time interval the PE registers are programmed directly 904 as there is no content in either PE registers or PE shadow registers. The last instruction programmed is a start 910-1 which may be programmed via the common aperture to start execution in lock step. During PE compute phase 902-1 the PE executes the programmed instructions and then generates compute complete event 912-1. In parallel the controller 150 programs (906-1) shadow registers intended for execution during compute phase 2 902-2. Once the compute complete event 912-1 is generated the register are updated (908-1) from the shadow registers which is a short phase which may take a few cycles, for example three cycles to copy the registers and start 910-2 the next compute job which may have a duration of hundreds or thousands of cycles. This helps ensure there is a minimal gap between compute jobs. During PE compute phase 902-2 the PE executes the programmed instructions and then generates compute complete event 912-2. In parallel the controller 150 programs (906-2) shadow registers intended for execution during compute phase 3 902-3. Once the compute complete event 912-2 is generated the registers are updated (908-2) from the shadow registers followed by a start instruction 910-3. During PE compute phase 902-3 the PE executes the programmed instructions and then generates compute complete event 912-3. As no more computation is required, no shadow registers are programmed. In this case, the compute complete event 912-2 also indicates that the compute task is complete for the scheduled time interval.

Embodiments of the neural network processor and method of operation described herein may allow choosing level of re-use across operands not only within each processing element, but also across the processing elements. This may be sharing of data and each working on different weights, or sharing of weights but working on different data, and finally also allowing a method working on different data and different weights, all of which are processed in a lock-step fashion. The programming is made simpler for multiple processing elements through a shared broadcast aperture allowing broadcast programming or individual element programming and a shadow register space in each PE allowing for programming next job while compute is ongoing. The zonal memory architecture may guarantee bandwidth for all ways of operation is guaranteed with limited busing. Virtual-to-Physical remapping of memory fragments may allow optimized use of available memory.

Embodiments of the neural network processor separate entirely the bandwidth of external memory access from the bandwidth used by compute to access the same memories later. The complexity of traversal/addressing/spatial collection etc is kept to the compute block. Adding prefetch capability to the PE unit means that the compute elements (PEs) can access the Tightly Coupled Memories (TCM) of the top level of the neural network processor at high speed and can be tolerant of multiple cycle of access. Embodiments provide a top level system which provides all the necessary facilities to enable the PEs to compute in a lock-step manner and be able to achieve high performance and high operational frequency, without having to handle individual PEs prefetching/sorting of data/parameters or caching. This may be achieved using arbitration-less zonal memory architecture and an event-based synchronization point for controlling: Compute, DataMover, V2P and Listening/sharing of data or parameters.

The neural network processor may provide a mechanism to very efficiently and flexibly divide down neural network inference into symmetric jobs with concurrent (lock-step) execution of computation by PEs, Data Movement and Programming of PEs. The traversing of parameters or data is split away from the top-level system. At a global level, the memory may just be viewed as linear regions divided into banks and zones. The address and memory arrangement is done entirely at PE level. The PEs are latency tolerant/Bandwidth sensitive and include shadow registers to keep the registers updated. The PEs can tolerate multi-cycle latency from the TCMs which gives a simple path for a top level which is focused on segmentation of the neural network inference into symmetrical sections, rather than handling any traversal complexities. Embodiments of the neural network processor may allow lock-step high-speed execution for a large variety of NN inference workloads.

A neural network processor processes layers of a neural network with a number of processing elements (PEs) configured to operate in lock-step and has a same number of memory zones. During a lock-step cycle, within each memory zone, a first set of zone memories are configured to store neural network layer input data, a second set of zone memories are configured to store neural network layer weights and a third set of zone memories are configured to store neural network layer results. A processing element has exclusive access to (i) a first set of zone memories, (ii) a second set of zone memories and (iii) a third set of zone memories. The sets of zone memories can be in the same or different zones during a lock-step cycle. A data mover has exclusive access to a fourth set of zone memories in each of the memory zones.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub combination.

The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A neural network processor comprising:
a plurality of N processing elements, PEs, coupled to a first layer switch network;
a plurality of N memory zones, each memory zone comprising a plurality of zone memories coupled to a respective second layer switch network, each second layer switch network coupled to the first layer switch network;
a data mover coupled to the first layer switch network and configured to be coupled to a system memory;
wherein the plurality of processing elements are configured to process layers of a neural network in a plurality of lock-step cycles during a compute phase and wherein in each lock-step cycle of the plurality of lock-step cycles:
a first set of zone memories within each zone are configured to store neural network layer input data;
a second set of zone memories within each zone are configured to store neural network layer weights;
a third set of zone memories within each zone are configured to store neural network layer results; and
each processing element of the plurality of processing elements is configured to exclusively access the first set of zone memories, the second set of zone memories and the third set of zone memories in at least one memory zone of the plurality of memory zones.

2. The neural network process of claim 1, wherein
during each lock-step cycle, the data mover is configured to exclusively access a fourth set of zone memories in at least one memory zone of the plurality of memory zones.

3. The neural network processor of claim 1 or 2 wherein each processing element of the plurality of processing elements is configured to exclusively access the first set of zone memories, the second set of zone memories and the third set of zone memories in a single respective memory zone of the plurality of memory zones.

4. The neural network processor of claim 1 or 2 wherein each processing element of the plurality of processing elements is configured to exclusively access the first set of zone memories, the second set of zone memories in a first single respective memory zone of the plurality of memory zones and configured to exclusively access the third set of zone memories in a second single respective memory zone of the plurality of memory zones.

5. The neural network processor of any preceding claim, wherein a first processing element of the plurality of processing elements is configured to have read access to a first memory zone of the plurality of memory zones and a second processing element of the plurality of processing elements is configured in a listening mode to receive data accessed by the first processing element.

6. The neural network processor of any preceding claim further comprising a controller, the controller configured to be coupled to a processing element control bus of each of the plurality of processing elements, a data mover control bus and further configured to be coupled to a system control bus, wherein the controller is configured to receive PE instructions and data mover instructions via the system control interface and to provide the PE instructions to the plurality of processing elements and data mover instructions to the data mover via the respective processing element control bus and the data mover control bus.

7. The neural network processor of claim 6, wherein each of the processing elements has a corresponding address aperture, the controller is further configured to:
provide a PE instruction to a processing element in response to a PE instruction address being within the corresponding address aperture; and simultaneously provide the PE instruction to all of the plurality of processing elements in response to the PE instruction address being within a common address aperture.

8. The neural network processor of claim 7, wherein each compute phase is initiated by a start instruction having a start instruction address within the common address aperture.

9. The neural network processor of any claim 7 or 8, wherein each of the processing elements comprise a plurality of instruction registers and a corresponding plurality of shadow registers, and wherein the plurality of instruction registers are updated from the plurality of shadow registers in response to a completion of the compute phase.

10. The neural network processor of claim 9, wherein control instructions for a next lock-step cycle are provided to each of the processing elements and stored in the plurality of shadow registers during a current compute phase.

11. The neural network processor of any preceding claim, wherein each of the plurality of processing elements further comprises a processing element data read bus, a processing element parameter read bus and a processing element result write bus coupled to the first layer switch network;
the data mover comprises a data mover write bus and a data mover read bus coupled to the first layer switch network, and further comprises a system memory bus;
the second layer switch network of each memory zone comprises a respective zone data read bus, a zone parameter read bus, a zone result write bus, a zone memory write bus and a zone memory read bus coupled to the first layer switch network; and
each of the plurality of zone memories comprises a local memory read bus and a local memory write bus coupled to the second layer switch network.

12. The neural network processor of claim 11, wherein during each lock-step cycle:
each of the plurality of zone memories of each memory zone is coupled to only one of the zone data read bus, the zone parameter read bus, the zone result write bus, the zone memory write bus and the zone memory read bus;
each processing element data read bus is coupled to a zone data read bus of one of the plurality of memory zones; each processing element parameter read bus is coupled to a respective zone parameter read bus of one of the plurality of memory zones;
each processing element result write bus is coupled to a zone parameter write bus of one of the plurality of memory zones;
the data mover write bus is coupled to the zone memory write bus for each memory zone of the plurality of memory zones; and
the data mover read bus is coupled to the zone memory read bus for each memory zone of the plurality of memory zones.

13. The neural network processor of any preceding claim, wherein the plurality of zone memories are configured in memory banks and wherein the plurality of processing elements and the data mover configured to receive a virtual address having a plurality of zone bits, a plurality of bank bits and a plurality of bank memory address bits and translate the plurality of zone bits and the plurality of bank bits to a physical memory zone address and a physical memory bank address within the memory zone.

14. A method of neural network processing, the method comprising:
processing layers of a neural network with a plurality of N processing elements configured to operate in lock-step in a plurality of lock-step cycles during a compute phase;
during each lock-step cycle of the plurality of lock-step cycles:
providing a plurality of N memory zones, each memory zone comprising a plurality of zone memories
providing a first set of zone memories within each memory zone configured to store neural network layer input data;
providing a second set of zone memories within each memory zone configured to store neural network layer weights;
providing a third set of zone memories within each memory zone configured to store neural network layer results; and
exclusively accessing by each processing element the first set of zone memories, the second set of zone memories and the third set of zone memories in at least one memory zone of a plurality of memory zones.

15. The method of claim 14, further comprising
during each lock-step cycle of the plurality of lock-step cycles:
exclusively accessing a fourth set of zone memories in at least one memory zone of the plurality of memory zones by a data mover.
